# EUROPÄISCHE PATENTSCHRIFT

(11) **EP 4 185 792 B1**
(45) Veröffentlichungstag und Bekanntmachung des Hinweises auf die Patenterteilung: **07.08.2024**
(21) Anmeldenummer: 21735155.0
(22) Anmeldetag: 21.06.2021
(51) Int. Cl.: F16H 57/033, H02K 7/116

(54) **GETRIEBEMOTOR, AUFWEISEND EIN GETRIEBE, EINEN ELEKTROMOTOR UND EINEN ADAPTERFLANSCH**
GEAR MOTOR HAVING A TRANSMISSION, AN ELECTRIC MOTOR, AND AN ADAPTER FLANGE
MOTEUR À ENGRENAGES DOTÉ D'UNE TRANSMISSION, D'UN MOTEUR ÉLECTRIQUE ET D'UNE BRIDE D'ADAPTATEUR

(30) Priorität: 21.07.2020 CN 202010703781; 14.10.2020 DE 102020006312
(43) Veröffentlichungstag der Anmeldung: 31.05.2023
(73) Patentinhaber: SEW-EURODRIVE GmbH & Co. KG, 76646 Bruchsal (DE)
(72) Erfinder: QIONGHUA, Gao, Tianjin (CN)
(86) Internationale Anmeldenummer: PCT/EP2021/025217
(87) Internationale Veröffentlichungsnummer: WO 2022/017635

(56) Entgegenhaltungen:
- CN-A- 111 697 751
- DE-A1- 102014 008 330
- DE-B- 1 032 635
- US-A- 2 910 882

## Beschreibung

Die Erfindung betrifft einen Getriebemotor, aufweisend ein Getriebe, einen Elektromotor und einen Adapterflansch.

Es ist allgemein bekannt, dass ein Getriebe über Lager drehbar gelagerte Wellen und Verzahnungsteile aufweist.

**Aus der** DE 100 61 501 C2 **ist eine aus einem Getriebemodul und einem Antriebsmodul bestehende Antriebseinheit bekannt.**

**Aus der** DE 10 32 635 B **ist als nächstliegender Stand der Technik ein Zahnradgetriebe bekannt.**

**Aus der** DE 10 2014 008330 A1 **ist ein Getriebemotor bekannt.**

**Aus der** US 2 910 882 A **ein eingehaustes winkelselektives Getriebe bekannt.**

Der Erfindung liegt daher die Aufgabe zugrunde, einen Getriebemotor weiterzubilden, wobei die Herstellung des Getriebemotors kostengünstig und der Getriebemotor kompakt sein soll.

Erfindungsgemäß wird die Aufgabe bei dem Getriebemotor nach den in Anspruch 1 angegebenen Merkmalen gelöst.

Wichtige Merkmale der Erfindung bei dem Getriebemotor sind, dass der Getriebemotor ein Getriebe, einen Elektromotor und einen Adapterflansch, insbesondere einen zwischen dem Getriebe und dem Elektromotor angeordnetem Adapterflansch, aufweist,
wobei der Adapterflansch einen zur Drehachse einer eintreibenden Welle des Getriebes rotationssymmetrisch ausgeformten, ringförmigen Grundkörper aufweist, an welchem ein Axialvorsprung angeformt ist,
wobei der Axialvorsprung auf der vom Elektromotor abgewandten Seite des Adapterflansches angeordnet ist,
wobei der Axialvorsprung in Umfangsrichtung unterbrochen ausgeführt ist und das Gehäuseteil in den unterbrochenen Bereich hineinragt.

Von Vorteil ist dabei, dass der Axialvorsprung zwar einerseits zur zentrierenden Verbindung mit dem Elektromotor und dem Getriebe geeignet ausgeführt ist, aber andererseits möglichst kompakt ausgeführt ist. Denn die Zentrierung erfordert zumindest auch eine zylindrische fein bearbeitete Fläche, an welcher die Ausrichtung erfolgt. Erfindungsgemäß ist aber die zylindrische Fläche in Umfangsrichtung unterbrochen, also nicht vollständig umlaufend ausgeführt. Somit ist dieser unterbrochene Bereich von einem Teilbereich des Gehäuseteils nutzbar, welches das größte Verzahnungsteil des Getriebes, also das mit der abtreibenden Welle drehfest verbunden Zahnrad, gehäusebildend umgibt.

Vorzugsweise beträgt der unterbrochene Umfangswinkelbereich weniger als 180°.

Ein weiterer Vorteil der Erfindung ist, dass der Adapterflansch zum Elektromotor hin einen anderen Flanschverbindungstyp, nämlich Rundflansch, als zum Getriebe hin, beispielsweise Quadratflansch, aufweist. Auch die Bohrbilder sind entsprechend verschieden verwendbar. Zum Getriebe hin ist beispielsweise ein rechteckiges und zum Motor hin ein polygonales, also einen Kreis besser annäherndes, Bohrbild anwendbar.

Dabei darf sogar der von dem von den Bohrungen des zum Elektromotor hin gewandten Bohrbildes überdeckte Radialabstandsbereich mit dem von den Bohrungen des zum Getriebe hin gewandten Bohrbildes überdeckte Radialabstandsbereich überlappen. In Umfangsrichtung sind jedoch alle Bohrungen der beiden Bohrbilder voneinander beabstandet. Die Bohrungen beider Bohrbilder sind vorzugsweise durchgehend durch den Adapterflansch ausgeführt.

Das erste, insbesondere das zum Getriebe hin gewandte und verwendete, Bohrbild ist nur in dem von dem Axialvorsprung überdeckten Umfangswinkelbereich angeordnet. Das zweite, insbesondere das zum Elektromotor hin gewandte und verwendete, Bohrbild überlappt auch mit dem von dem unterbrochenen Bereich des Axialvorsprungs überdeckten Umfangswinkelbereich. Somit sind die Symmetrieachsen der diskreten Drehsymmetrieen der beiden Bohrbilder nicht deckungsgleich, sondern voneinander beabstandet. Auf diese Weise ist der Adapterflansch besonders kompakt ausführbar. Denn durch die Beabstandung der Symmetrieachsen ist der unterbrochene Bereich zwischen dem ringförmigen Grundkörper des Adapterflansches und Gehäuseteil des Getriebes erst bereitstellbar.

Bei einer vorteilhaften Ausgestaltung ist der Adapterflansch zum Elektromotor hin mit einem Rundflansch verbunden und zum Getriebe hin mit einem Rechteckflansch oder Quadratflansch verbunden. Von Vorteil ist dabei, dass verschiedene Flanschtypen mit entsprechend verschiedenen Bohrbildern und Zentrierflächen vorsehbar sind.

Bei der Erfindung weist der Adapterflansch auf seiner dem Elektromotor zugewandten Seite erste, axial gerichtete Bohrlöcher auf, durch welche Verbindungselemente, wie Gewindestangen oder Schrauben, hindurchragen, die auch durch einen Lagerflansch des Elektromotors hindurchragen,
wobei das Bohrbild der ersten Löcher bezogen auf die Drehachse der eintreibenden Welle eine diskrete Drehsymmetrie, insbesondere eine mehr als sechszählige Drehsymmetrie, aufweist. Von Vorteil ist dabei, dass die Drehachse der Rotorwelle des Elektromotors zum Adapterflansch mittig, insbesondere zentrisch, ausgerichtet ist. Somit ist eine stabile Befestigung des Adapterflansches ermöglicht.

Bei einer vorteilhaften Ausgestaltung weist der Adapterflansch auf seiner dem Getriebe zugewandten Seite zweite, axial gerichtete Bohrlöcher auf, welche durch den Axialvorsprung des Adapterflansches und den ringförmigen Grundkörper des Adapterflansches durchgehen, wobei durch die zweiten Bohrlöcher Verbindungselemente, wie Gewindestangen oder Schrauben, hindurchragen und in in das Gehäuseteil eingebrachte Gewindebohrungen eingeschraubt sind,
insbesondere wobei das Bohrbild der zweiten Bohrlöcher bezogen auf eine von der Drehachse der eintreibenden Welle beabstandete, zu dieser Drehachse parallel ausgerichtete Symmetrieachse eine diskrete Drehsymmetrie, insbesondere eine zweizählige Drehsymmetrie, aufweist. Von Vorteil ist dabei, dass der Getriebemotor kompakt ausführbar ist, da die mechanische getriebeseitige Schnittstelle, insbesondere Zentrierung und Befestigung, derart verschoben und angeordnet ist, dass ein unterbrochener Bereich des Axialvorsprungs vorsehbar ist und durch die Einhausung des mit der abtreibenden Welle verbundenen Verzahnungsteils zumindest teilweise befüllbar ist.

Bei der Erfindung ist der Adapterflansch an einem Aufnahmeteil des Getriebes koaxial zur Drehachse der eintreibenden Welle ausgerichtet und zentriert
wobei das Aufnahmeteil, insbesondere mittels eines zylindrischen Zentrierkragens, am Gehäuseteil des Getriebes ausgerichtet ist, insbesondere zentriert ist,
insbesondere wobei das Aufnahmeteil mittels Schrauben mit dem Gehäuseteil verbunden ist,
insbesondere wobei das Aufnahmeteil von Schraubenköpfen der in axial gerichtete Gewindebohrungen des Gehäuseteils eingeschraubten Schrauben zum Gehäuseteil hingedrückt gehalten ist. Von Vorteil ist dabei, dass der Adapterflansch am Aufnahmeteil zentriert ist, in welchem die Lager der eintreibenden Welle aufgenommen sind. Somit wird nicht das Gehäuseteil des Getriebes, sondern das Aufnahmeteil, welches die Lagerung aufnimmt, für die Zentrierung verwendet. Somit ist der Elektromotor mit seinem dem Adapterflansch zugewandten Lagerflansch am Adapterflansch zentriert, der wiederum am Aufnahmeteil zentriert ist, in welchem die Lager der eintreibenden Welle zentrisch aufgenommen sind. Auf diese Weise ist der Elektromotor, insbesondere dessen durch ein im Lagerflansch aufgenommenes Lager gelagerte Rotorwelle koaxial ausgerichtete zur eintreibenden Welle des Getriebes.

Bei einer vorteilhaften Ausgestaltung sind im Aufnahmeteil Lager aufgenommen, deren Innenring auf die eintreibende Welle jeweils aufgesteckt ist.

Bei einer vorteilhaften Ausgestaltung ist der ringförmige Grundkörper in Umfangsrichtung vollständig umlaufend ausgebildet, insbesondere ununterbrochen ausgeformt sind. Von Vorteil ist dabei, dass eine hohe Stabilität erreichbar ist. Außerdem ist zu dem Elektromotor hin ein drehsymmetrisches Bohrbild vollständig vorsehbar, so dass im Bereich der Unterbrechung trotzdem der Elektromotor befestigbar ist. Auch das Getriebe ist unterbrechungsfrei befestigbar, da das Bohrbild im Axialvorsprung anordenbar ist und somit eine stabile Verbindung zwischen dem Adapterflansch und dem Gehäuseteil des Getriebes herstellbar ist.

Bei der Erfindung weist der größte Wert des vom Axialvorsprung überdeckten Radialabstandbereichs als Funktion des Umfangswinkels vier lokale Maxima auf, wobei jeder von einem zweiten Bohrloch überdeckte Umfangswinkelbereich den zu einem jeweiligen lokalen Maximum gehörigen Umfangswinkel enthält. Von Vorteil ist dabei, dass die Bohrungen des dem Getriebe zugewandten Bohrbildes in den radial breiteren Bereichen des Axialvorsprungs angeordnet sind.

Bei der Erfindung weist der Axialvorsprung eine zum Getriebe hin gewandte fein bearbeitete Fläche auf, deren kleinster Radialabstand in einem Teilbereich des vom Axialvorsprung überdeckten Umfangswinkelbereichs konstant ist,
insbesondere wobei der Teilbereich mehr als 80% des vom Axialvorsprung überdeckten Umfangswinkelbereichs überdeckt. Von Vorteil ist dabei, dass eine präzise Zentrierung ausführbar ist.

Bei einer vorteilhaften Ausgestaltung ist ein Deckelteil mit dem Aufnahmeteil verbunden, insbesondere mittels einer zwischengeordneten Dichtung, insbesondere Flachdichtung, dicht verbunden ist,
wobei im Deckelteil ein Wellendichtring aufgenommen ist, der zur eintreibenden Welle hin abdichtet, insbesondere dessen Dichtlippe auf einer an der eintreibenden Welle ausgebildeten Dichtfläche läuft. Von Vorteil ist dabei, dass der eintreibende Bereich, insbesondere die

Lagerung der eintreibenden Welle öldicht abgeschlossen ist. Außerdem ist durch Aufsetzen und Verbinden des Deckelteils ein Wellendichtring aktiviert, der die Abdichtung weiter verbessert. Dabei weist das Deckelteil einen Zentrierkragen auf, mit welchem das Deckelteil an dem Aufnahmeteil ausrichtbar ist. Auf diese Weise ist der im Deckelteil aufgenommene Wellendichtring koaxial zentriert zu der eintreibenden Welle des Getriebes, obwohl die Lager im Aufnahmeteil aufgenommen sind und somit bei der Herstellung die Bearbeitung der Lagersitze in einem einzigen Arbeitsgang mit einer Werkzeugmaschine durchführbar ist.

Bei einer vorteilhaften Ausgestaltung sind ein Druckring und ein Klemmring auf die eintreibende Welle aufgesteckt, wobei der Druckring an einem ersten der Lager anliegt, wobei der Klemmring kraftschlüssig mit der eintreibenden Welle verbunden ist,
insbesondere wobei axial gerichtete Schrauben am Klemmring abgestützt und in axial gerichtete Gewindebohrungen des Druckrings eingeschraubt, so dass die am Klemmring 50 abgestützten Schrauben den Druckring gegen das erste Lager drücken, insbesondere gegen den Innenring des ersten Lagers drücken. Von Vorteil ist dabei, dass eine einfache Anordnung zur Herstellung der Lagerspannung verwendbar ist.

Bei einer vorteilhaften Ausgestaltung ist das Gehäuse einer Wellenendpumpe mit dem Gehäuseteil verbunden und eine Zwischenwelle des Getriebes ist mit einem drehbaren Teil der Wellenendpumpe drehfest verbunden, insbesondere und dieses antreibt. Von Vorteil ist dabei, dass Öl passiv, insbesondere also ohne elektromotorisch angetriebene Pumpe, sondern durch eine durch die bei Betrieb drehende Zwischenwelle angetriebene Pumpe, förderbar ist.

Bei einer vorteilhaften Ausgestaltung gelangt von der Wellenendpumpe aus dem Ölsumpf gefördertes Öl durch einen im Gehäuseteil angeordneten ersten Kanal, insbesondere durch einen durch das Gehäuseteil durchgehenden, ersten Kanal, welcher in einen zweiten, durch das Aufnahmeteil durchgehenden Kanal mündet, und durch den zweiten Kanal zum weiter von der Zwischenwelle entfernt angeordneten Lager,
insbesondere wobei der erste Kanal aus ins Gehäuseteil eingebrachten Bohrungen gebildet ist und/oder wobei der zweite Kanal aus ins Aufnahmeteil eingebrachten Bohrungen gebildet ist. Von Vorteil ist dabei, dass eine passive Schmierung der Kegelgetriebestufe und vor allem
deren Lager ermöglicht ist, auch wenn die eintreibende Welle vertikal ausgerichtet ist, also die Drehachse der eintreibenden Welle parallel zur Gravitationsrichtung ausgerichtet ist.

Bei einer vorteilhaften Ausgestaltung ist im Gehäuseteil ein dritter Kanal angeordnet, der zum ersten Kanal spiegelsymmetrisch ausgeführt ist, insbesondere zu einer Spiegelebene, welche die Drehachse der eintreibenden Welle enthält. Von Vorteil ist dabei, dass die Wellenendpumpe alternativ am anderen Ende der Zwischenwelle anordenbar ist und somit eine gleichartige Kanalstruktur vorhanden ist. Optional sind sogar an beiden Enden der Zwischenwelle jeweils eine Wellenendpumpe anordenbar. Somit ist die langsamer als die eintreibende Welle drehende Zwischenwelle trotzdem zur Förderung eines großen Ölstroms verwendbar. Denn durch die zwei, wenn auch langsamer angetriebenen Wellenendpumpen ist ein großer Ölstrom förderbar.

Bei einer vorteilhaften Ausgestaltung ist im Aufnahmeteil ein vierter Kanal angeordnet, der zum zweiten Kanal spiegelsymmetrisch ausgeführt, insbesondere zu einer Spiegelebene, welche die Drehachse der eintreibenden Welle enthält. Von Vorteil ist dabei, dass die Wellenendpumpe alternativ am anderen Ende der Zwischenwelle anordenbar ist und somit eine gleichartige Kanalstruktur vorhanden ist. Optional sind sogar an beiden Enden der Zwischenwelle jeweils eine Wellenendpumpe anordenbar. Somit ist die langsamer als die eintreibende Welle drehende Zwischenwelle trotzdem zur Förderung eines großen Ölstroms verwendbar. Denn durch die zwei, wenn auch langsamer angetriebenen Wellenendpumpen ist ein großer Ölstrom förderbar.

Bei einer vorteilhaften Ausgestaltung weist der erste Kanal eine erste, radial gerichtete, ins Gehäuseteil eingebrachte Sacklochbohrung auf, die in eine zweite, axial gerichtete ins Gehäuseteil eingebrachte, zur Umgebung mit einem Verschlussstopfen verschlossene Sacklochbohrung mündet, welche eine dritte, radial gerichtete, durch das Gehäuseteil durchgehende Bohrung kreuzt, die in eine vierte, radial gerichtete, ins Aufnahmeteil eingebrachte Bohrung mündet, die eine fünfte axial gerichtete, ins Aufnahmeteil eingebrachte Sacklochbohrung kreuzt,
insbesondere wobei die vierte Bohrung zur eintreibenden Welle hin mittels eines Stopfens nur unvollständig verschlossen und/oder öldurchlässig angeordnet ist, wobei der Stopfen in axialer Richtung zwischen den Lagern der eintreibenden Welle angeordnet ist und somit von der

Wellenendpumpe gefördertes Öl aus der vierten Bohrung am Stopfen vorbei, in axialer Richtung zwischen den Lagern der eintreibenden Welle, austritt und das unterhalb der vierten Bohrung angeordnete Lager der beiden Lager der eintreibenden Welle mit Öl versorgt,
insbesondere wobei der erste Kanal einen Auslass oberhalb der Lager der eintreibenden Welle aufweist. Von Vorteil ist dabei, dass über den Auslass das obere der Lager versorgt wird und über den öldurchlässig angeordneten Stopfen das untere der Lager versorgt wird mit Öl.

Bei einer vorteilhaften Ausgestaltung der erste Kanal die erste, zweite, dritte, vierte und fünfte Bohrung umfasst. Von Vorteil ist dabei, dass eine einfache Herstellung durch Einbringen von Bohrungen ausführbar ist. Besonders vorteilhaft werden aber Sacklochbohrungen verwendet, da diese dann keinen Verschlussstopfen benötigen.

Bei einer vorteilhaften Ausgestaltung weist das Aufnahmeteil vier in Umfangsrichtung voneinander beabstandete durch das Aufnahmeteil durchgehende Radialbohrungen auf, die an derselben axialen Stelle des Aufnahmeteils angeordnet sind, insbesondere also denselben axialen Bereich überdecken. Von Vorteil ist dabei, dass einerseits zumindest eine der Bohrungen als Eintrittsöffnung für Öl fungiert und somit ÖL, das gefiltert und gefördert ist in den Zwischenraumbereich zwischen eintreibender Welle und dem Aufnahmeteil, so dass das Öl an der eintreibenden Welle entlang zu demjenigen der beiden Lager der eintreibenden Welle herunterfließt, das in Gravitationsrichtung weiter unten angeordnet ist.

Bei einer vorteilhaften Ausgestaltung ist ein Kegelritzel mit der eintreibenden Welle drehfest verbunden, das mit einem mit der Zwischenwelle drehfest verbundenen Kegelrad im Eingriff ist,
wobei ein schrägverzahntes Stirnrad mit der Zwischenwelle drehfest verbunden ist, das mit einem mit der abtreibenden Welle des Getriebes drehfest verbundenen Zahnrad im Eingriff ist,
insbesondere wobei eine von einer in die eintreibende Welle eingeschraubten Schraube formschlüssig gehaltene Scheibe das Kegelritzel in axialer Richtung begrenzt. Von Vorteil ist dabei, dass eine eintreibende Kegelgetriebestufe von einer Stirnradstufe gefolgt wird. Die Zahnräder der Stirnradstufe sind schrägverzahnt ausführbar. Somit ist ein geräuscharmer Betrieb erreichbar.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von schematischen Abbildungen näher erläutert:

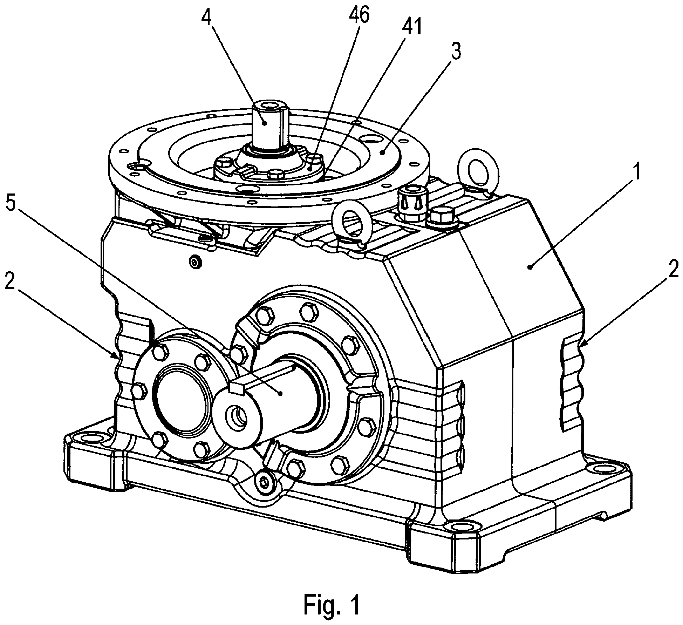

In der Figur 1 ist ein Getriebe mit einem Adapterflansch 3 zur Verbindung mit einem Elektromotor 120 in Schrägansicht dargestellt.

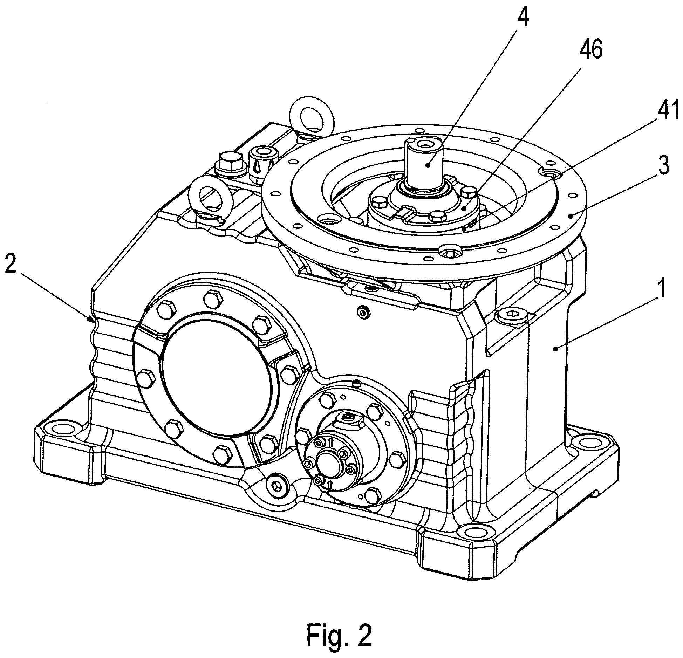

In der Figur 2 ist das Getriebe aus einer anderen Blickrichtung dargestellt.

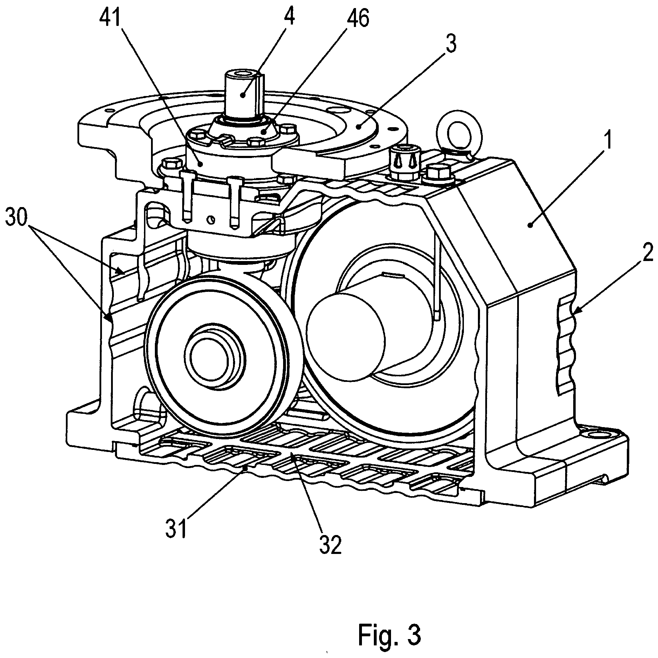

In der Figur 3 ist das Getriebe angeschnitten dargestellt.

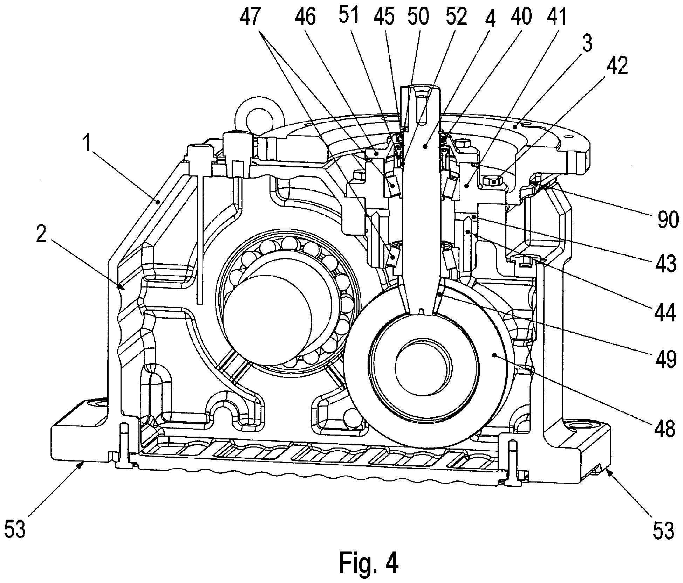

In der Figur 4 ist eine weitere Schnittansicht des Getriebes dargestellt.

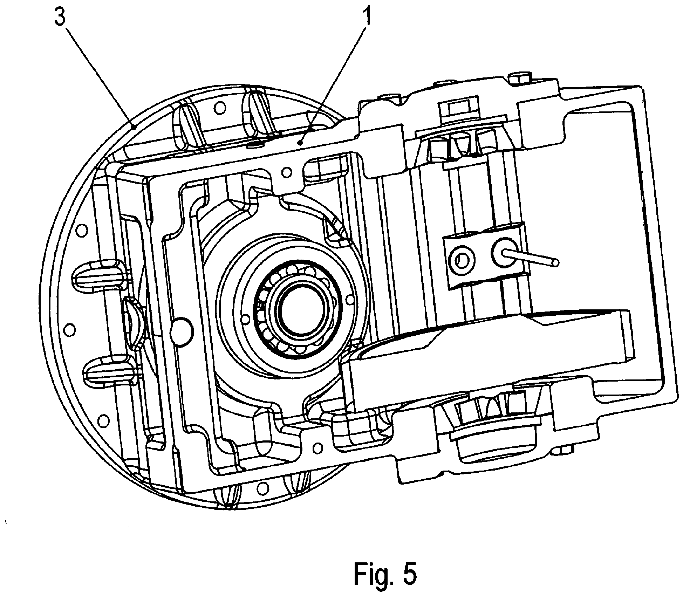

In der Figur 5 ist ein dazu senkrecht ausgeführter Schnitt des Getriebes dargestellt.

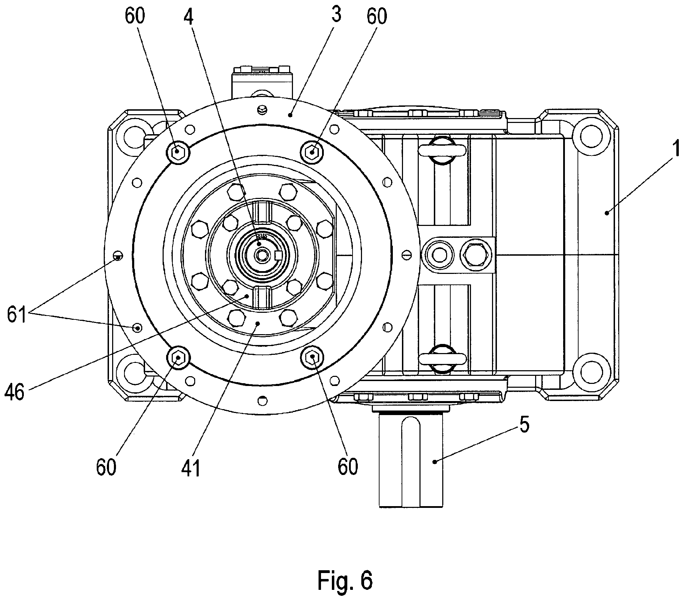

In der Figur 6 ist eine zur Figur 1 gehörige Draufsicht auf das Getriebe mit Adapterflansch 3 dargestellt.

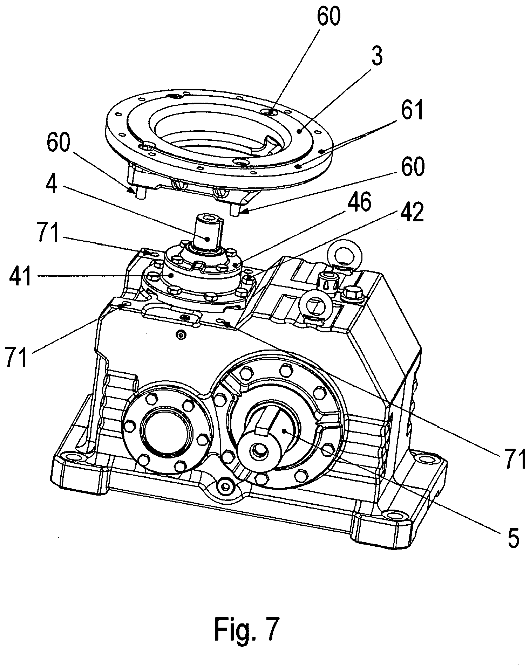

In der Figur 7 ist das Getriebe mit einem explodiert dargestellten Adapterflansch 3 in Schrägansicht ausgeführt.

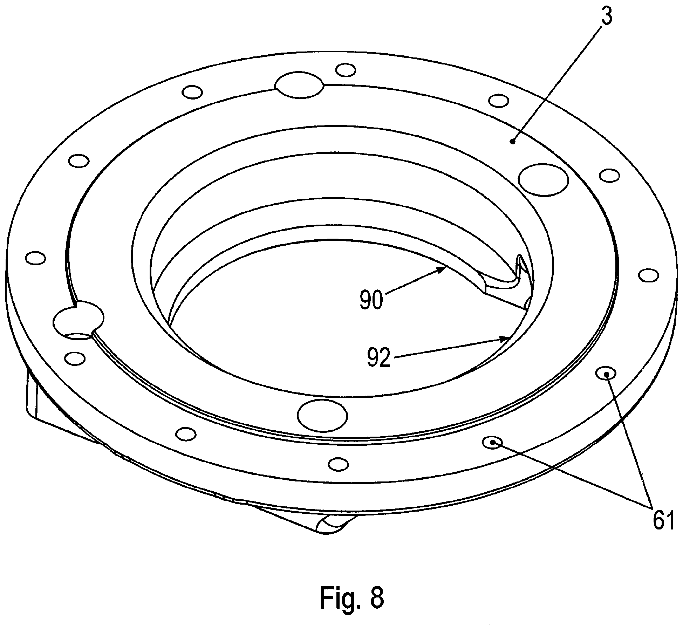

In der Figur 8 ist der Adapterflansch 3 aus einer ersten Blickrichtung in Schrägansicht dargestellt.

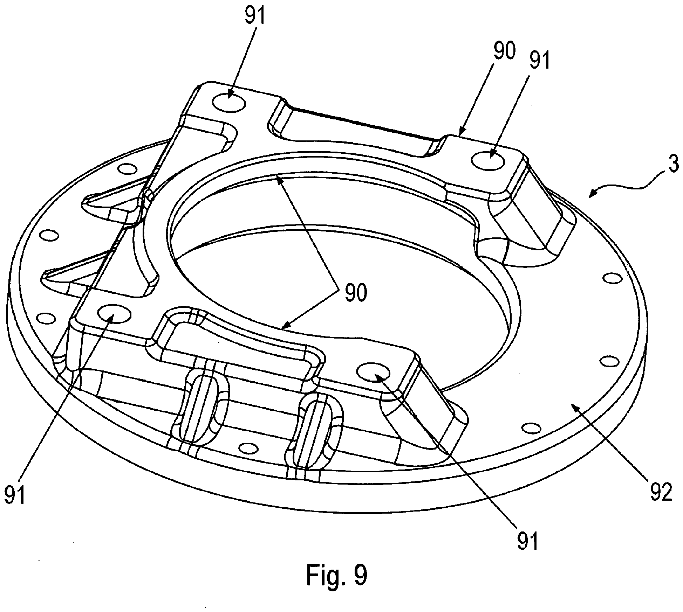

In der Figur 9 ist der Adapterflansch 3 aus einer zweiten Blickrichtung in Schrägansicht dargestellt.
In der Figur 10 ist eine Schnittansicht des Getriebes derart dargestellt, dass der eintreibende Bereich des Getriebes erkennbar ist.

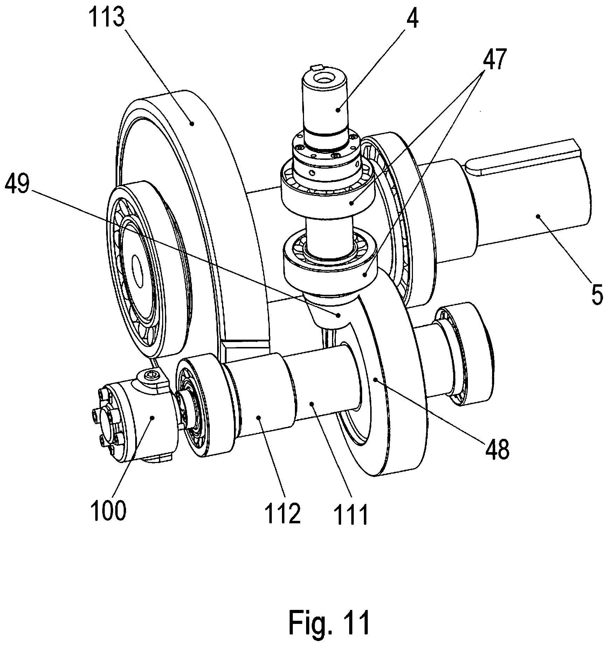

In der Figur 11 sind die Wellen, Verzahnungsteile und Lager des Getriebes in Schrägansicht dargestellt, wobei das Gehäuseteil 1 des Getriebes und das Schmieröl des Getriebes weggelassen wurde.

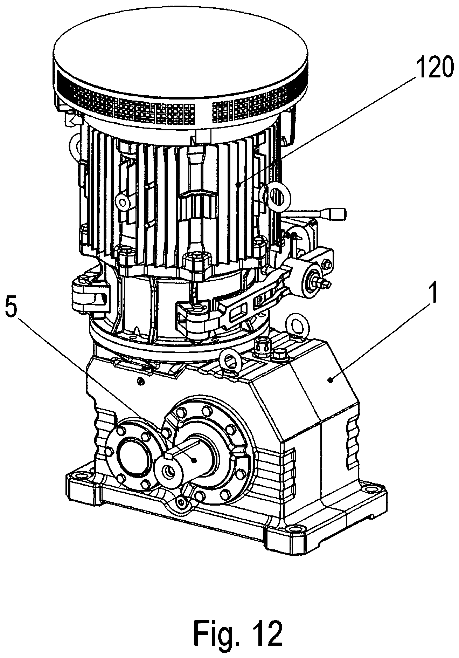

In der Figur 12 ist das mit einem Elektromotor 120 verbundene Getriebe in Schrägansicht dargestellt.

Wie in den Figuren dargestellt, wird zwischen dem Elektromotor 120 und dem Gehäuseteil 1 des Getriebes ein Adapterflansch 3 angeordnet, so dass der Elektromotor 120 am Adapterflansch zentrierbar ist und mittels Schrauben an den Adapterflansch 3 montierbar ist.

Der Adapterflansch 3 ist am Gehäuseteil 1 zentriert und mittels Schrauben mit dem Gehäuseteil 1 verbunden.

Der Adapterflansch 3 weist an seiner zum Elektromotor 120 hin gewandten Seite eine kreisrunde Außenform auf. Insbesondere ist der größte Außenumfang des Adapterflansches 3 kreisrund ausgeführt, insbesondere als zylinderförmige Außenkontur.

Die dem Motor 120 zugewandte mechanische Schnittstelle, insbesondere aufweisend einen Zentrierbund und ein Bohrbild, weist eine Drehsymmetrie auf, insbesondere bezogen auf die Drehachse der eintreibenden Welle 4. Die Drehsymmetrie ist mindestens diskret, kann aber auch kontinuierlich ausgeführt sein.

Radialabstände sind hier stets auf die Drehachse der eintreibenden Welle 4 bezogen. Ebenso ist die axiale Richtung parallel zu der Drehachse der eintreibenden Welle 4. Auch die Umfangsrichtung ist auf die Drehachse der eintreibenden Welle 4 bezogen.

Auf seiner dem Getriebegehäuse 1 zugewandten Seite weist der Adapterflansch 3 einen axial zum Gehäuseteil 1 hervorragenden Axialvorsprung 90 auf, der in Umfangsrichtung aber durch einen verdünnten Wandbereich 92 unterbrochen ist. Dabei weist der verdünnte Wandbereich 92 in axialer Richtung eine geringere Ausdehnung, insbesondere Wandstärke, auf als in dem von dem Axialvorsprung 90 überdeckten Umfangswinkelbereich.

Der Adapterflansch 3 weist also vorzugsweise einen ringförmigen Grundkörper auf, der rotationssymmetrisch zur Drehachse der eintreibenden Welle 4 des Getriebes ausgebildet ist und an dem der Axialvorsprung 90 getriebeseitig angeformt ist, der aber nicht rotationssymmetrisch ist, sondern in einem Umfangswinkelbereich unterbrochen ist. In diesen unterbrochenen Umfangswinkelbereich ragt das Gehäuseteil 1, insbesondere eine das abtreibende Zahnrad 113 zumindest teilweise gehäusebildend umgebende Aufwölbung des Gehäuseteils 1, hinein, wobei der vom Gehäuseteil 1 in diesem unterbrochenen Bereich, also in diesem Umfangswinkelbereich und in dem von dem Grundkörper in axialer Richtung überdeckten Bereich, überdeckte Radialabstandsbereich mit demjenigen Radialabstandsbereich überlappt, der vom Grundkörper überdeckt wird.

Somit ragt also das Gehäuseteil 1 in den unterbrochenen Bereich des Axialvorsprungs 90 hinein.

In dem Axialvorsprung 90 sind axial gerichtete Bohrlöcher 91 eingebracht, insbesondere die ein rechteckiges, insbesondere quadratisches, Bohrbild bilden.

Somit sind die Schrauben zur Verbindung des Gehäuseteils 1 mit dem Adapterflansch 3 in einer rechteckigen Anordnung vorgesehen.

Zum Getriebe hin ist also ein quadratischer Flansch verwendbar und zum Motor 120 hin ist ein Rundflansch verwendbar.

Der Axialvorsprung 90 überdeckt nur einen Teil des gesamten Umfangswinkelbereichs. Der maximal überdeckte Radialabstand als Funktion des Umfangswinkels weist vier lokale Maxima auf.

Der vom jeweiligen Bohrloch 91 überdeckte Umfangswinkelbereich enthält jeweils den Umfangswinkelwert eines jeweiligen der Maxima.

Somit ist das jeweilige Bohrloch 91 jeweils in einem radial verbreiterten Bereich des Axialvorsprungs 90 angeordnet.

Der Axialvorsprung 90 weist an seinem Innenumfang, also an seinem kleinsten Radialabstand einen innenzylindrischen Oberflächenbereich auf, der allerdings in dem nicht vom Axialvorsprung 90 überdeckten Umfangswinkelbereich unterbrochen ist.

Dieser Innenumfang fungiert als zentrierende Aufnahme für ein Aufnahmeteil 41 des Getriebes. Der innenzylindrische Oberflächenbereich ist koaxial zur Drehachse der eintreibenden Welle 4 ausgerichtet.

Außerdem wiest der Axialvorsprung eine fein bearbeitete, axial hervorstehende Kreisringfläche in dem vom Axialvorsprung 90 überdeckten Umfangswinkelbereich auf.

Mittels dieser Kreisringfläche wird der Adapterflansch 3 an fein bearbeitete ebene Flächenbereiche des Gehäuseteils 1 angelegt. Dabei ist in jede der fein bearbeiteten ebenen Flächenbereiche eine jeweilige axial gerichtete Bohrung, insbesondere Gewindebohrung, eingebracht, wobei Schrauben durch die Bohrlöcher 91 geführt sind und in die in die fein bearbeiteten ebenen Flächenbereiche des Gehäuseteils 1 eingebrachten Gewindebohrungen 71 eingeschraubt sind.

Die Kreisringfläche des Axialvorsprungs 90 und die Flächenbereiche, in welche die Bohrlöcher 91 eingebracht sind, befinden sich auf derselben axialen Position. Diese axiale Position ist die vom Elektromotor 120 am weitest entfernte, vom Adapterflansch 3 bedeckte Position.

Der verdünnte Wandbereich 92 des Adapterflansches 3 liegt auf einer Auswölbung, insbesondere Erhöhung, des Gehäuseteils 1 auf oder weist zumindest nur einen geringen Abstand auf. Diese Auswölbung umgibt ein mit der abtreibenden Welle verbundenes Zahnrad 113 zumindest teilweise gehäusebildend.

Die abtreibende Welle 5 ist senkrecht zur eintreibenden Welle 4 ausgerichtet.

Dass mit der abtreibenden Welle 5 drehfest verbundene Zahnrad 113 zusammen mit der Auswölbung überdeckt in axialer Richtung, also in einer zur Drehachse der eintreibenden Welle senkrechten Richtung einen Bereich, welcher den von den Lagern 47 der eintreibenden Welle 4 überdeckten Bereich umfasst.

Der Elektromotor 120 weist ein Statorgehäuse auf, das axial beidseitig mit jeweils einem als Rundflansch ausgeführten Lagerflansch verbunden ist. Jeder der beiden Lagerflansche nimmt jeweils ein Lager auf, das auf die Rotorwelle des Elektromotors 120 aufgesteckt ist. Somit ist die Rotorwelle über die beiden in den Lagerflanschen aufgenommenen Lager drehbar gelagert.

Die beiden Lagerflansche sind als Rundflansch ausgeführt. Daher weisen sie einen im Wesentlichen kreisrunden Außenumfang auf. Das Bohrbild der für die Verbindungsschrauben zur Verbindung des ersten der beiden Lagerflansche mit dem Adapterflansch 3 weist eine diskrete Drehsymmetrie auf, wobei die Drehsymmetrieachse der Drehachse der Rotorwelle entspricht, insbesondere also der Drehachse der zur Rotorwelle koaxial angeordneten eintreibenden Welle 4. Der Adapterflansch 3 weist zum ersten Lagerflansch des Elektromotors 120 hin ebenfalls ein Bohrbild mit derselben diskreten Drehsymmetrie auf.

Die Lager 47 sind in einem Aufnahmeteil 41 aufgenommen, das einen nach radial außen hervorragenden, in Umfangsrichtung umlaufenden Kragen aufweist, welcher mittels Schrauben, die in axial gerichtete Gewindebohrungen des Gehäuseteils 1 eingeschraubt sind, an das Gehäuseteil 1 angepresst wird,

Dabei ist an diesem Kragen eine Stufe fein bearbeitet und somit zur Zentrierung am Gehäuseteil 1 geeignet ausgeführt.

Die Lager 47 sind auf die eintreibende Welle 4 aufgesteckt, die somit drehbar gelagert ist.

Ein Deckelteil 46 ist mittels in Gewindebohrungen des Aufnahmeteils 47 eingeschraubten Schrauben, insbesondere mittels der Schraubenköpfe dieser Schrauben, an das Aufnahmeteil 47 angedrückt. Im Deckelteil 46 ist ein Wellendichtring 45 aufgenommen, der das Deckelteil 46 zur eintreibenden Welle 4 hin abdichtet.

Auf der eintreibenden Welle 4 sind ein an einem ersten der Lager 47 anliegender Druckring 52 und ein Klemmring 50 aufgesteckt, wobei der Klemmring 50 kraftschlüssig mit der eintreibenden Welle 4 verbunden ist. Axial gerichtete Schrauben 51 sind am Klemmring 50 abgestützt und in axial gerichtete Gewindebohrungen des Druckrings 52 eingeschraubt, so dass die am Klemmring 50 abgestützten Schrauben den Klemmring 52 gegen da erste Lager 47 drücken. Insbesondere drückt hierbei der Druckring 52 auf den Innenring des ersten Lagers 47.

Die eintreibende Welle 4 ist durch das Deckelteil 46 durchgesteckt.

Die eintreibende Welle 4 ist drehfest mit einem Kegelritzel 49 verbunden, dessen Verzahnung mit der Verzahnung eines Rads 48, insbesondere Kegelrads, im Eingriff ist.

Der Außenring des ersten Lagers 47 ist gegen einen Absatz des Aufnahmeteils 41 angestellt.

Das Kegelritzel 49 ist auf einen Konusförmigen Endbereich der eintreibenden Welle 4 aufgesteckt und mittels einer Scheibe axial gesichert, die von einer in der Stirnseite der eintreibenden Welle 4 mittig eingeschraubten Schraube an die Stirnseite der eintreibenden Welle 4 angepresst wird. Außerdem ist das Kegelritzel 49 kraftschlüssig und/oder formschlüssig verbunden, insbesondere mittels Passfederverbindung.

Am Deckelteil 46 ist ein axial hervorragender, in Umfangsrichtung umlaufender Zentrierkragen ausgeformt, der an einem am Aufnahmeteil 41 ausgebildeten Zentriersitz ausgerichtet und zentriert ist.

Das Kegelritzel 49 ist im Eingriff mit der Verzahnung eines Rads 48, insbesondere Kegelrads.

Das Rad 48 ist drehfest mit einer Zwischenwelle 111 verbunden, die mittels im Gehäuseteil aufgenommener Lager drehbar gelagert ist und drehfest verbunden ist mit einer Verzahnung 112, die im Eingriff ist mit der Verzahnung eines Zahnrads 113, das drehfest mit der abtreibenden Welle 5 verbunden ist.

Somit weist das erfindungsgemäße, vorzugsweise zweistufige Getriebe eine eintreibende Kegelgetriebestufe auf, der eine abtreibend angeordnete Stirnradgetriebestufe folgt. Die Verzahnungen der Stirnradgetriebestufe weisen vorzugsweise jeweils einen nicht verschwindenden Schrägungswinkel auf.

Mit der Zwischenwelle 111 ist eine Wellenendpumpe 100 verbunden. Somit wird diese Wellenendpumpe zwar nicht von der schnell drehenden eintreibenden Welle 4 angetrieben, sondern von der Zwischenwelle 111, die aber immerhin schneller dreht als die abtreibende Welle 5.

Der Ölpegel des im Innenraum des Getriebes angeordneten Öls überdeckt oder erreicht die Ritzelverzahnung. Jedoch sind beide Lager 47 der eintreibenden Welle 4 oberhalb des Ölpegels angeordnet und somit nach langem Stillstand des Getriebes nicht geschmiert.

Sobald das Getriebe in Betrieb genommen wird, pumpt daher die von der Zwischenwelle 111 angetriebene Wellenendpumpe 100 Öl vom unterhalb des Ölpegels angeordnetem Ölsumpf zu einer oberhalb der Lager 47 angeordneten Position, so dass die Lager 47 geschmiert sind und auch der Wellendichtring 40 nicht trockenläuft.

Die eintreibende Welle 4 ist parallel zur Normalenrichtung der Oberfläche des Ölsumpfes ausgerichtete, insbesondere bei längerem Stillstand des Getriebes.

Die sonstigen Lager, Verzahnungen (112, 49) und Zahnräder (48, 113) sind stets zumindest teilweise in den Ölsumpf des Getriebes eingetaucht.

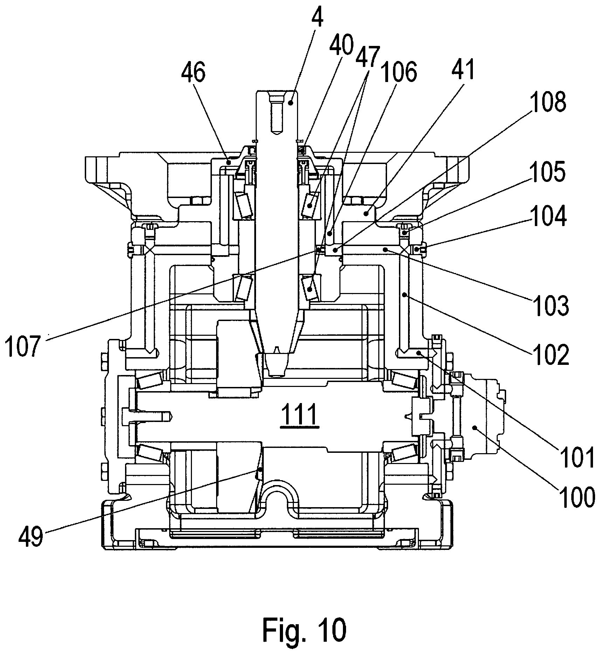

Wie in Figur 10 dargestellt, fördert die Wellendpumpe 100 Öl in eine radial gerichtete Bohrung 101 des Gehäuseteils 1. Diese ist als Sacklochbohrung von außen eingebracht und mündet in eine axial gerichtete Bohrung 102 des Gehäuseteils 1, welche ebenfalls von außen eingebracht ist, als Sacklochbohrung ausgeführt ist und an ihrem dem Elektromotor 120 zugewandten Ende mit einem Verschlussstopfen 105 verschlossen ist.

Eine durch das Gehäuseteil 1 durchgehende, radial gerichtete Bohrung 103 kreuzt die Bohrung 102 und mündet in eine in das Aufnahmeteil 41 eingebrachte, durch das Aufnahmeteil 41 durchgehende Radialbohrung 108, die zur eintreibenden Welle 4 hin mit einem Stopfen 107 verschlossen, der aber nicht vollständig dicht ist sondern eine geringe Ölmenge durchlässt, die dann in einem Spalt zwischen dem Gehäuseteil 1 und der eintreibenden Welle 4 zum unteren, also vom Elektromotor 120 weiter entfernteren Lager 47 gelangt.

Eine axial gerichtete, von außen ins Aufnahmeteil 41 eingebrachte Sacklochbohrung 106 mündet in die Radialbohrung 108, so dass das von der Wellenendpumpe 100 geförderte Öl am dem Deckelteil 46 zugewandten Ende des Aufnahmeteils 41 austritt und das obere, also dem Elektromotor 120 zugewandte Lager 47 mit Öl versorgt. Somit wird dann auch das unterhalb des ersten Lagers 47 angeordnete zweite Lager 47 versorgt.

Die beiden Lager 47 sind vorzugsweise als Schräglager ausgeführt.

Das mit dem Gehäuseteil 1 öldicht verbundene Aufnahmeteil 41 umgibt zusammen mit dem mit dem Aufnahmeteil 41 öldicht verbundenen Deckelteil 46 den Innenraumbereich des Getriebes.

Bei Betrieb des Getriebes und somit Drehbewegung der Zwischenwelle 111 wird von der Wellenendpumpe 100 Öl entgegen der Gravitationsrichtung gefördert und somit die Lager 47 mit Öl geschmiert. Außerdem nimmt das an den Lagern 47 vorbeiströmende Öl Verlustwärme auf, die danach vom Ölsumpf an die Umgebung abgeführt wird.

Um einen möglichst geringen Wärmeübergangswiderstand vom Ölsumpf zur Umgebung hin zu erreichen, werden an der Innenseite des Gehäuseteils Bereiche mit insbesondere voneinander regelmäßig beabstandeten Vertiefungen 30 ausgebildet.

In diesen Bereichen ist die Wandstärke vorzugsweise nicht konstant, sondern die Bereiche sind an ihrer Außenseite glatt, insbesondere eben, ausgeführt.

Somit variiert die Wandstärke in diesen Bereichen synchron mit den Vertiefungen 30.

Jede der Vertiefungen 30 erstreckt sich dabei senkrecht zur axialen Richtung, also senkrecht zur Drehachse der eintreibenden Welle 4, mehr als in axialer Richtung.

Vorzugsweise sind die Vertiefungen 30 unterhalb des Ölpegels angeordnet und bieten somit an der Innenseite eine vergrößerte Oberfläche, so dass der Wärmeübergangswiderstand vom Öl zum Gehäuseteil 1 verringert wird und die Wärme in den zwischen den Vertiefungen 30 angeordneten, insbesondere durch die ebene Ausführung des jeweiligen Bereichs an der Außenseite, verdickten Zonen aufnehmbar, insbesondere infolge der durch die Verdickung erzeugten größeren Wärmekapazität. Von dort wird die Wärme dann im Gehäuseteil 1 aufgespreizt und an die Umgebung abgeleitet.

In weiteren Bereichen sind an der Außenseite des Gehäuseteils Vertiefungen 2 vorgesehen, wobei in diesen weiteren Bereichen die Wandstärke konstant ist. Somit sind nicht nur an der Außenseite insbesondere voneinander regelmäßig beabstandete Vertiefungen 2 sondern auch an der Innenseite entsprechende Vertiefungen ausgeformt.

Jede der Vertiefungen 2 erstreckt sich dabei ebenfalls senkrecht zur axialen Richtung, also senkrecht zur Drehachse der eintreibenden Welle 4, mehr als in axialer Richtung.

Somit sind die Vertiefungen 2 zur Erreichung eines besonderen, Herkunft-kennzeichnenden Designeindrucks am Gehäuseteil 1 ausformbar. Hingegen dienen die nur an der Innenseite ausgeprägten Vertiefungen 30 nicht dem Designeindruck, sondern der Verbesserung der Wärmeableitung.

An der Unterseite des Getriebes ist der Innenraum des Getriebes mittels eines Getriebedeckels 31 verschlossen, der ebenfalls Vertiefungen 2 mit konstanter Wandstärke aufweist, wobei aber an der Innenseite des Getriebedeckels Versteifungsrippen 32 ausgeformt sind, die sich gegenseitig kreuzen. Somit ist der Getriebedeckel 31 einerseits steif und vermittelt auch einen herkunfts-kennzeichnenden Designeindruck, wobei somit die Unterseite des Ölsumpfes beruhigt wird, da das strömende Öl nicht nur die Versteifungsrippen 32 überwinden, sondern auch zwischen den Versteifungsrippen 32 die Vertiefungen und Erhebungen überwinden muss. Somit bildet sich eine weniger laminare und mehr turbulente Strömung im Ölsumpf aus, wenn das Öl bewegt wird. Dadurch ist ebenfalls der Wärmetransport vom Öl zum Getriebedeckel 31 verbessert.

Im Aufnahmeteile 41 ist eine in Umfangsrichtung von der Radialbohrung 108 beabstandete durch das Aufnahmeteile 41 durchgehende Radialbohrung 43 angeordnet, in welche eine ins Aufnahmeteil eingebrachte, axial gerichtete Sacklochbohrung mündet, die zum Ölsumpf hin aus dem Aufnahmeteil 41 austritt. Somit ist eine Ölabführung aus dem Raumbereich zwischen der eintreibenden Welle und dem Aufnahmeteil ermöglicht. Insbesondere bei Überdruck in diesem Bereich fungiert diese Ölabführung als Druckentlastung.

Nach radial außen hin ist Radialbohrung 43 mittels des Gehäuseteils 1 verschlossen, in welches das Aufnahmeteil 41 hineinragt. Spiegelsymmetrisch zu einer die Drehachse der eintreibenden Welle enthaltenden Symmetrieebene weist das Aufnahmeteil 41 eine weitere solche Druckentlastung auf.

Auf diese Weise weist also das Aufnahmeteil 41 an derselben axialen Position vier in Umfangsrichtung voneinander beabstandete durch das Aufnahmeteil durchgehende Radialbohrungen auf

Bei weiteren nicht beanspruchten Ausführungsbeispielen wird das Kegelritzel 49 mit der eintreibenden Welle einteilig, insbesondere einstückig, ausgeführt.

### Bezugszeichenliste

1 Gehäuseteil
2 Vertiefungen
3 Adapterflansch
4 eintreibende Welle
5 abtreibende Welle
30 Vertiefungen
31 Getriebedeckel
32 Versteifungsrippen
40 Wellendichtring
41 Aufnahmeteil
42 **Schraube**
43 Radialbohrung
44 Axialbohrung
45 Wellendichtring
46 Deckelteil
47 Lager, insbesondere Schrägrollenlager
48 Rad, insbesondere Kegelrad
49 Kegelritzel
50 Klemmring
51 Schrauben
52 Druckring
60 Schraube
61 erste Bohrlöcher
71 Bohrung, insbesondere Gewindebohrung.
90 Axialvorsprung
91 zweites Bohrloch
92 verdünnter Wandbereich
100 Wellenendpumpe
101 Radialbohrung
102 Axialbohrung
103 Radialbohrung
104 Verschlussstofpen
105 Verschlussstopfen
106 Axialbohrung
107 Stopfen
108 Radialbohrung
111 Zwischenwelle
112 Verzahnung
113 Zahnrad
120 Elektromotor

## Patentansprüche

1. Getriebemotor, aufweisend ein Getriebe, einen Elektromotor und einen zwischen dem Getriebe und dem Elektromotor angeordnetem Adapterflansch (3),
wobei der Adapterflansch (3) einen zur Drehachse einer eintreibenden Welle des Getriebes rotationssymmetrisch ausgeformten, ringförmigen Grundkörper aufweist, an welchem ein Axialvorsprung angeformt ist,
wobei der Axialvorsprung auf der vom Elektromotor abgewandten Seite des Adapterflansches (3) angeordnet ist,
- wobei der Axialvorsprung in Umfangsrichtung unterbrochen ausgeführt ist und das Gehäuseteil (1) in den unterbrochenen Bereich hineinragt,
wobei der Adapterflansch (3) auf seiner dem Elektromotor zugewandten Seite erste, axial gerichtete Bohrlöcher (61) aufweist, durch welche Verbindungselemento hindurchragen, die auch durch einen Lagerflansch des Elektromotors hindurchragen,
**dadurch gekennzeichnet dass**
das Bohrbild der ersten Löcher bezogen auf die Drehachse der eintreibenden Welle eine diskrete Drehsymmetrie, aufweist,
wobei im Aufnahmeteil (41) Lager aufgenommen sind, deren Innenring auf die eintreibende Welle jeweils aufgesteckt ist,
wobei der ringförmige Grundkörper in Umfangsrichtung vollständig umlaufend ausgebildet ist,
wobei der Adapterflansch (3) an einem Aufnahmeteil (41) des Getriebes koaxial zur Drehachse der eintreibenden Welle ausgerichtet und zentriert ist,
wobei das Aufnahmeteil (41) mittels eines zylindrischen Zentrierkragens am Gehäuseteil (1) des Getriebes ausgerichtet ist, insbesondere zentriert ist,
wobei der größte Wert des vom Axialvorsprung überdeckten Radialabstandbereichs als Funktion des Umfangswinkels vier lokale Maxima aufweist,
wobei jeder von einem zweiten Bohrloch (91) überdeckte Umfangswinkelbereich den zu einem jeweiligen lokalen Maximum gehörigen Umfangswinkel enthält,
wobei der Axialvorsprung eine zum Getriebe hin gewandte fein bearbeitete Fläche aufweist, deren kleinster Radialabstand in einem Teilbereich des vom Axialvorsprung überdeckten Umfangswinkelbereichs konstant ist.

2. Getriebemotor nach Anspruch 1,
**dadurch gekennzeichnet, dass**
der Adapterflansch (3) zum Elektromotor hin mit einem Rundflansch verbunden ist und zum Getriebe hin mit einem Rechteckflansch oder Quadratflansch verbunden ist.

3. Getriebemotor nach einem der vorangegangenen Ansprüche,
**dadurch gekennzeichnet, dass**
der Adapterflansch (3) auf seiner dem Elektromotor zugewandten Seite erste, axial gerichtete Bohrlöcher (61) aufweist, durch welche Verbindungselemente, wie Gewindestangen oder Schrauben, hindurchragen, die auch durch einen Lagerflansch des Elektromotors hindurchragen,
wobei das Bohrbild der ersten Löcher bezogen auf die Drehachse der eintreibenden Welle eine diskrete Drehsymmetrie, insbesondere eine mehr als sechszählige Drehsymmetrie, aufweist.

4. Getriebemotor nach einem der vorangegangenen Ansprüche,
**dadurch gekennzeichnet, dass**
der Adapterflansch (3) auf seiner dem Getriebe zugewandten Seite zweite, axial gerichtete Bohrlöcher (91) aufweist, welche durch den Axialvorsprung des Adapterflansches (3) und den ringförmigen Grundkörper des Adapterflansches (3) durchgehen,
wobei durch die zweiten Bohrlöcher (91) Verbindungselemente, wie Gewindestangen oder Schrauben, hindurchragen und in in das Gehäuseteil (1) eingebrachte Gewindebohrungen eingeschraubt sind,
insbesondere wobei das Bohrbild der zweiten Bohrlöcher bezogen auf eine von der Drehachse der eintreibenden Welle beabstandete parallele Symmetrieachse eine diskrete Drehsymmetrie, insbesondere eine zweizählige Drehsymmetrie, aufweist.

5. Getriebemotor nach einem der vorangegangenen Ansprüche,
**dadurch gekennzeichnet, dass**
der ringförmige Grundkörper in Umfangsrichtung ununterbrochen ausgeformt ist.

6. Getriebemotor nach einem der vorangegangenen Ansprüche,
**dadurch gekennzeichnet, dass**
ein Deckelteil mit dem Aufnahmeteil (41) verbunden ist, insbesondere mittels einer zwischengeordneten Dichtung, insbesondere Flachdichtung, dicht verbunden ist,
wobei im Deckelteil ein Wellendichtring aufgenommen ist, der zur eintreibenden Welle hin abdichtet, insbesondere dessen Dichtlippe auf einer an der eintreibenden Welle ausgebildeten Dichtfläche läuft.

7. Getriebemotor nach einem der vorangegangenen Ansprüche,
**dadurch gekennzeichnet, dass**
ein Druckring (52) und ein Klemmring (50) sind auf die eintreibende Welle aufgesteckt, wobei der Druckring (52) an einem ersten der Lager (47) anliegt
wobei der Klemmring 50 kraftschlüssig mit der eintreibenden Welle (4) verbunden ist,
insbesondere wobei axial gerichtete Schrauben (51) am Klemmring (50) abgestützt und in axial gerichtete Gewindebohrungen des Druckrings (52) eingeschraubt, so dass die am Klemmring 50 abgestützten Schrauben den Druckring (52) gegen das erste Lager (47) drücken, insbesondere gegen den Innenring des ersten Lagers (47) drücken.

8. Getriebemotor nach einem der vorangegangenen Ansprüche,
**dadurch gekennzeichnet, dass**
mit der eintreibenden Welle ein Kegelritzel drehfest verbunden ist, das mit einem mit einer Zwischenwelle drehfest verbundenen Kegelrad im Eingriff ist,
wobei ein schrägverzahntes Stirnrad mit der Zwischenwelle drehfest verbunden ist, das mit einem mit der abtreibenden Welle des Getriebes drehfest verbundenen Zahnrad im Eingriff ist,
insbesondere wobei eine von einer in die eintreibende Welle eingeschraubten Schraube formschlüssig gehaltene Scheibe das Kegelritzel in axialer Richtung begrenzt.

## Claims

1. A geared motor, having a gear unit, an electric motor and an adapter flange (3) arranged between the gear unit and the electric motor,
wherein the adapter flange (3) has an annular base body formed rotationally symmetrically to the axis of rotation of an input shaft of the gear unit, on which base body an axial projection is formed,
wherein the axial projection is arranged on that side of the adapter flange (3) which faces away from the electric motor,
- wherein the axial projection is formed interrupted in the peripheral direction and the housing part (1) protrudes into the interrupted region,
wherein the adapter flange (3) has on its side facing the electric motor first, axially directed, drilled holes (61), through which protrude connecting elements which also protrude through a bearing flange of the electric motor,
**characterised in that**
the drilling pattern of the first drilled holes has a discrete rotational symmetry relative to the axis of rotation of the input shaft,
with bearings being received in the receiving part (41), the inner ring of which bearings is mounted in each case on the input shaft,
with the annular base body being formed to be completely circumambient in the peripheral direction,
with the adapter flange (3) being oriented and centred on a receiving part (41) of the gear unit coaxially with the axis of rotation of the input shaft,
with the receiving part (41), by means of a cylindrical centring collar, being oriented, in particular centred, on the housing part (1) of the gear unit,
with the greatest value of the radial distance region covered by the axial projection as a function of the angle at circumference having four local maxima,
with each angle-at-circumference region covered by a second drilled hole (91) containing the angle at circumference belonging to a respective local maximum,
with the axial projection having a finish-machined face facing towards the gear unit, the shortest radial distance of which face is constant in a partial region of the angle-at-circumference region covered by the axial projection.

2. A geared motor according to claim 1,
**characterised in that**
the adapter flange (3) towards the electric motor is connected to a round flange and towards the gear unit is connected to a rectangular flange or square flange.

3. A geared motor according to one of the preceding claims,
**characterised in that**
the adapter flange (3) has on its side facing the electric motor first, axially directed, drilled holes (61), through which protrude connecting elements, such as threaded rods or screws, which also protrude through a bearing flange of the electric motor,
with the drilling pattern of the first holes having a discrete rotational symmetry, in particular a more than six-fold rotational symmetry, relative to the axis of rotation of the input shaft.

4. A geared motor according to one of the preceding claims,
**characterised in that**
the adapter flange (3) has on its side facing the gear unit second, axially directed, drilled holes (91) which pass through the axial projection of the adapter flange (3) and the annular base body of the adapter flange (3),
with connecting elements, such as threaded rods or screws, protruding through the second drilled holes (91) and being screwed into threaded bores formed in the housing part (1),
in particular with the drilling pattern of the second drilled holes having a discrete rotational symmetry, in particular a two-fold rotational symmetry, relative to a parallel axis of symmetry spaced apart from the axis of rotation of the input shaft.

5. A geared motor according to one of the preceding claims,
**characterised in that**
the annular base body is formed uninterrupted in the peripheral direction.

6. A geared motor according to one of the preceding claims,
**characterised in that**
a cover part is connected to the receiving part (41), in particular is connected tightly by means of an interposed seal, in particular flat seal,
with there being received in the cover part a shaft sealing ring which seals off towards the input shaft, in particular the sealing lip of which runs on a sealing face formed on the input shaft.

7. A geared motor according to one of the preceding claims,
**characterised in that**
a pressure ring (52) and a clamping ring (50) are mounted on the input shaft, with the pressure ring (52) lying on a first one of the bearings (47),
with the clamping ring 50 being connected in a force-fit to the input shaft (4),
in particular with axially directed screws (51) being supported on the clamping ring (50) and screwed into axially directed threaded bores in the pressure ring (52), so that the screws supported on the clamping ring 50 press the pressure ring (52) against the first bearing (47), in particular press it against the inner ring of the first bearing (47).

8. A geared motor according to one of the preceding claims,
**characterised in that**
a bevel pinion is connected non-rotatably to the input shaft, which bevel pinion is engaged with a bevel wheel connected non-rotatably to an intermediate shaft,
with a helical spur gear being connected non-rotatably to the intermediate shaft, which spur gear is engaged with a gear wheel, connected non-rotatably to the output shaft of the gear unit,
in particular with a disc held in a form-fit by a screw screwed into the input shaft limiting the bevel pinion in the axial direction.

## Revendications

1. Motoréducteur, comprenant une transmission, un moteur électrique et une bride d'adaptation (3) agencée entre la transmission et le moteur électrique,
la bride d'adaptation (3) présentant un corps de base de forme annulaire symétrique en rotation par rapport à l'axe de rotation d'un arbre d'entrée de la transmission et au niveau duquel est formée une saillie axiale,
la saillie axiale étant agencée sur le côté de la bride d'adaptation (3) qui est opposé au moteur électrique,
- la saillie axiale étant interrompue dans la direction circonférentielle et la partie carter (1) faisant saillie dans la région interrompue,
la bride d'adaptation (3) présentant sur son côté tourné vers le moteur électrique des premiers trous forés (61) orientés de manière axiale et traversés par des éléments de liaison également traversés par une bride de palier du moteur électrique,
**caractérisé en ce que**
le schéma de forage des premiers trous présente une symétrie de rotation discrète par rapport à l'axe de rotation de l'arbre d'entrée,
des paliers dont la bague intérieure est respectivement enfichée sur l'arbre d'entrée étant logés dans la partie logement (41),
le corps de base annulaire étant entièrement circonférentiel dans la direction circonférentielle,
la bride d'adaptation (3) étant orientée et centrée de manière coaxiale par rapport à l'axe de rotation de l'arbre d'entrée, au niveau d'une partie logement (41) de la transmission,
la partie logement (41) étant orientée, en particulier centrée, au niveau de la partie carter (1) de la transmission au moyen d'une collerette de centrage cylindrique,
la plus grande valeur de la plage de distance radiale couverte par la saillie axiale présentant quatre maxima locaux en fonction de l'angle circonférentiel,
chaque plage angulaire circonférentielle recouverte par un deuxième trou foré (91) contenant l'angle circonférentiel associé à un maximum local respectif,
la saillie axiale présentant une surface finement usinée, tournée vers la transmission, dont la plus petite distance radiale est constante dans une sous-plage de la plage angulaire circonférentielle recouverte par la saillie axiale.

2. Motoréducteur selon la revendication 1,
**caractérisé en ce que**
la bride d'adaptation (3) est reliée au moteur électrique par une bride ronde et est reliée à la transmission par une bride rectangulaire ou une bride carrée.

3. Motoréducteur selon l'une quelconque des revendications précédentes,
**caractérisé en ce que**
la bride d'adaptation (3) présente, sur son côté tourné vers le moteur électrique, des premiers trous forés (61) orientés de manière axiale et traversés par des éléments de liaison, tels que des tiges filetées ou des vis, traversés également par une bride de palier du moteur électrique,
le schéma de forage des premiers trous par rapport à l'axe de rotation de l'arbre d'entrée présentant une symétrie de rotation discrète, en particulier une symétrie de rotation d'ordre supérieur à six.

4. Motoréducteur selon l'une quelconque des revendications précédentes,
**caractérisé en ce que**
la bride d'adaptation (3) présente, sur son côté tourné vers la transmission, des deuxièmes trous forés (91) orientés de manière axiale et traversant la saillie axiale de la bride d'adaptation (3) et le corps de base annulaire de la bride d'adaptation (3),
des éléments de liaison, tels que des tiges filetées ou des vis, traversant les deuxièmes trous forés (91) et étant vissés dans des alésages filetés ménagés dans la partie carter (1),
la schéma de forage des deuxièmes trous forés présentant en particulier une symétrie de rotation discrète, en particulier une symétrie de rotation d'ordre deux, par rapport à un axe de symétrie parallèle distant de l'axe de rotation de l'arbre d'entrée.

5. Motoréducteur selon l'une quelconque des revendications précédentes,
**caractérisé en ce que**
le corps de base annulaire est formé de manière ininterrompue dans la direction circonférentielle.

6. Motoréducteur selon l'une quelconque des revendications précédentes,
**caractérisé en ce que**
une partie couvercle est reliée, en particulier est reliée de manière étanche grâce à un joint d'étanchéité intermédiaire, en particulier un joint plat, à la partie logement (41), une bague d'étanchéité d'arbre qui assure l'étanchéité par rapport à l'arbre d'entrée, en particulier dont la lèvre d'étanchéité s'étend sur une surface d'étanchéité formée sur l'arbre d'entrée, étant logée dans la partie couvercle.

7. Motoréducteur selon l'une quelconque des revendications précédentes,
**caractérisé en ce que**
une bague de pression (52) et une bague de serrage (50) sont enfichées sur l'arbre d'entrée, la bague de pression (52) s'appuyant sur un premier des paliers (47) la bague de serrage 50 étant reliée avec verrouillage par complémentarité de force à l'arbre d'entrée (4),
des vis (51) orientées axialement s'appuyant en particulier sur la bague de serrage (50) et étant vissées dans des alésages filetés orientés axialement de la bague de pression (52), de sorte que les vis s'appuyant sur la bague de serrage (50) pressent la bague de pression (52) contre le premier palier (47), en particulier contre la bague intérieure du premier palier (47).

8. Motoréducteur selon l'une quelconque des revendications précédentes,
**caractérisé en ce que**
un pignon conique, en prise avec une roue conique reliée de manière solidaire en rotation à un arbre intermédiaire, est relié de manière solidaire en rotation à l'arbre d'entrée,
une roue dentée droite à denture hélicoïdale, en prise avec une roue dentée reliée de manière solidaire en rotation à l'arbre de sortie de la transmission, est reliée de manière solidaire en rotation à l'arbre intermédiaire,
un disque retenu par une vis vissée dans l'arbre d'entrée délimitant de manière particulièrement préférée le pignon conique dans la direction axiale.
